# EUROPEAN PATENT APPLICATION

(11) **EP 3 091 191 A1**
(43) Date of publication of application: **09.11.2016**
(21) Application number: 15166946.2
(22) Date of filing: 08.05.2015
(51) Int. Cl.: F01D 11/02, F01D 25/18, F16J 15/44

(54) **SEALING ARRANGEMENT FOR A STEAM TURBINE**

(71) Applicant: Siemens Aktiengesellschaft, 80333 München (DE)
(72) Inventor: Rujbr, Milan, 61600 Brno (CZ); Jankura, Peter, 63500 BRNO (CZ)

(57) **Abstract**

It is described an arrangement (100) for sealing and a manufacturing method, the arrangement comprising: a body (101); a plurality of sheet ring sections (103, 103a, 103b) being entities different from the body (101); and a mounting equipment (105) that mounts the plurality of ring sections (103) spaced apart in an axial direction (107) at the body such that the plurality of ring sections extends in a radial direction (109) inwards.

## Description

### Field of invention

The present invention relates to an arrangement for sealing, to a bearing arrangement comprising the arrangement for sealing, to a steam turbine comprising the bearing arrangement and further relates to a method of manufacturing an arrangement for sealing.

### Art Background

For preventing lubricant leaking, such as oil leakage, from a bearing supporting a rotor, for example a rotor of a turbine, in particular a steam turbine, an oil gland (also referred to as oil seal or arrangement for sealing) is conventionally employed. The oil gland may be a portion of a housing of the bearing. The oil gland or sealing arrangement prevents oil or in general lubricant from leaking from an inside of the casing of the bearing to an outside of the bearing.

The conventional oil gland or sealing arrangement may comprise two main parts, an upper part and a lower part which are then assembled and joined together, when the rotor is enclosed therein. Thereby, the upper part and the lower part of the conventional oil gland may have a special shape (shape's barrier-wall). This shape comprises plural projections from a body which are integrally formed with the body and which extend in a radial direction inwards, in order to extent almost towards an outside surface of the rotor. By having a relatively small gap between the end portions of the plural projections and the rotor, oil leakage is prevented or at least reduced. The conventional oil gland thus requires a special shape which is very complicated to manufacture. In particular, for manufacturing the complicated shape of the conventional oil gland, a special shape forming tool or shape torning tool is required. Thereby, the manufacturing of the conventional oil gland may be very expensive.

Thus, there may be a need for an arrangement for sealing (or sealing arrangement) and there may be also a need for a method of manufacturing a sealing arrangement that is easy to be performed resulting in a reliable, simple, cost effective sealing arrangement that effectively and efficiently seals against oil leakage or lubricant leakage. Furthermore, there may be a need for a bearing arrangement which is simple in construction and which is easy to manufacture, in particular not requiring a shape torning tool. Furthermore, there may be a need for a steam turbine which can be safely operated without oil leakage.

### Summary of the Invention

The need is satisfied by the subject-matter of the independent claims and the dependent claims directed to a bearing arrangement and to a steam turbine. Advantageous embodiments of the present invention are described by the dependent claims.

According to an embodiment of the present invention it is provided an arrangement for sealing (in particular a lubricant fluid, from transmission from a first space to a second space), the arrangement comprising a body, a plurality of sheet ring sections being entities/structures different (separate/not integrally formed) from the body, and a mounting equipment that mounts the plurality of ring sections spaced apart in an axial direction at the body such that the plurality of ring sections extends in a radial direction inwards (in particular to a substantially same length, in order to leave a small gap toward an outside surface of a rotor).

The arrangement for sealing may prohibit or even avoid transfer of lubricant, such as oil, from an inside of a bearing to an outside of a bearing, the bearing rotatably supporting a rotor, such as a rotor of a turbine, in particular a steam turbine (or for example a gas turbine). The body may be integrally formed, for example from a metal, such as aluminum or stainless steel. Each sheet ring section is (in a disassembled state or condition) separate, i.e. not integrally formed from the body. Thereby the sheet ring section may easily be replaced when damaged. The sheet ring sections may be made of a metal, such as aluminum, steel, or an alloy of different metals. The total number of sheet ring sections may for example be between 5 and 20, in particular 8. Each of the sheet ring sections may extend in the radial direction inwards (in particular to a substantially same length or to a substantially same radial position) in order to almost extend to or towards an outer surface of a rotor supported by the bearing.

Each radially inner end of each sheet ring section may provide for a (partial) sealing function. For example, lubricant or oil may be prohibited or at least reduced in leaking through a small gap between the radially inner end of each sheet ring section and an outer surface of the rotor. Within an inside of a housing of the bearing, a particular lubricant pressure or oil pressure may prevail. Thereby, a sheet ring section limiting the inside of the bearing may not completely avoid any leakage or lubricant or oil towards the next sheet ring section. However, an oil pressure and the amount of oil present between the sheet ring section limiting the inside of the bearing and the next outside sheet ring section may be substantially reduced compared to the oil pressure acting on the inside sheet ring section. Thus, oil leakage through a gap between the radially inner end of the sheet ring section and the outer surface of the rotor may decrease from sheet ring section to sheet ring section when proceeding from the most inner sheet ring section towards the most outer sheet ring section. Thereby, a reliable efficient sealing function may be achieved.

In particular, the sheet ring sections may be spaced apart from each other, in particular equally spaced apart from each other. Thus, void spaces between adjacent sheet ring sections may be provided. In one or more of these void spaces between adjacent sheet ring sections, a gas, such as an inert gas, may be fed and may be put under a particular pressure higher than an atmospheric pressure, in order to even further improve a sealing function by repelling oil from entering the void space that is set under a positive pressure.

Each of the sheet ring sections may also be referred to as labyrinth strip. They may be formed as a metal sheet having a thickness of about 0.6 mm.

The mounting equipment may be constructed in a number of ways. The mounting equipment may for example comprise one or more bolts, (threaded) rods, nuts and washers. In order to fix the sheet ring sections to be axially spaced apart, plural distance rings (for example made from plastic or hardened textile cut, in particular having a thickness of about 2 mm) may be arranged between adjacent sheet ring sections.

Each sheet ring section may comprise a metal sheet formed as a section of a ring, in particular forming half of a circular ring. By providing the sections of a ring, it may be easier to assemble a casing of a bearing supporting a rotor, because the rotor needs to be inserted or enclosed between the different portions of the sealing, in order to seal circumferentially. In other embodiments, the sheet ring sections may be formed as a third, a fourth, a fifth or the like of a complete circular ring. Thereby, assembling the bearing or the casing of the bearing such that the rotor is accompanied in an inside of the casing of the bearing may be simplified.

Each sheet ring section may comprise two limiting plane surfaces opposed relative to each other. Thereby, it may be easy to manufacture the sheet ring sections. For example, from plane metal sheets, circular rings may be cut out and the circular rings may be divided in two half circle sections.

According to an embodiment of the present invention, the arrangement further comprises at least one spacer ring section alternatingly arranged between respective two of the sheet ring sections to define an axial separation distance of the sheet ring sections, the spacer ring section being in particular manufactured using plastic and/or metal.

Each of the spacer ring sections may form a section of a ring having the same circumferential extent as the sheet ring section. The sealing arrangement may comprise at least two sheet ring sections and at least one spacer ring section which is arranged between the two sheet ring sections. In order to achieve a more effective sealing, more sheet ring sections (alternating with spacer ring sections) may be required and provided.

The mounting equipment may comprise at least one bolt (or thread rod) or more bolts, such as e.g. four bolts, wherein the sheet ring sections and the spacer ring sections each comprise at least one through-hole through which the bolt extends. The through-holes of the sheet ring sections and the spacer ring sections may slightly bigger in diameter than the outside diameter of the bolt. Thereby, a secure manner to fix the sheet ring sections at the body may be provided.

The body may comprise a first axial portion where a first set of the sheet ring sections are mounted alternating with spacer ring sections, a second axial portion where a second set of the sheet ring sections are mounted alternating with spacer ring sections, and an intermediate portion between the first axial portion and the second axial portion where no sheet ring sections are mounted.

The first axial portion of the body may be arranged towards an inside of a bearing to be sealed and the second axial portion of the body may be arranged towards an outside of the bearing to be sealed. Further, the first set of the sheet ring sections may therefore be mounted closer to the inside of the casing of the bearing than the second set of sheet ring sections. The intermediate portion may allow to introduce a pressurized gas in order to improve the sealing function.

The first axial portion of the body may comprise at least one threaded hole (or several such holes) into which an outside thread at one end of the bolt is screwed. Thereby, the first set of sheet ring sections may be securely fixed.

In particular, the bolt may comprise an annular projection (a section having a larger diameter than the through-holes of the sheet ring sections and the spacer ring sections) in order to hold and thereby secure the first set of sheet ring sections (alternating with the spacer ring sections), when the bolt is threaded at the one end into the threaded hole of the first axial portion of the body. The second axial portion of the body may comprise a through-hole through which the bolt is guided and thereby supported.

In particular, material limiting the through-hole at the second axial portion may support a first sheet ring section of the second set of sheet ring sections which is located closest to the inside of the bearing. By providing the through-hole at the second axial portion of the body, the second set of sheet ring sections may effectively be secured and supported. Conversely, the first set of sheet ring sections may be secured and supported by the bolt being screwed into the threaded hole in the first axial portion of the body and the projection of the bolt fixing the first set of sheet ring sections.

The arrangement may further comprise, in particular the mounting equipment, a nut, screwed onto the bolt at another end of the bolt thereby securing the plurality of sheet ring sections, in particular the second set of sheet ring sections, alternating with the at least one spacer ring section. The nut may thus be accessible from an outside of the casing of the bearing when the bearing is assembled. Thereby, an assembly may be simplified. Furthermore, a secure fixing manner for fixing the second set of sheet ring sections may be provided.

The body may comprise at the intermediate portion an entry duct for gas inlet into a space (void space) between the first set of sheet ring sections and the second set of sheet ring sections. The axial distance between the first set of sheet ring sections and the second set of sheet ring sections may be around 1 times and 1.5 times the axial thickness of the second set of sheet ring sections mounted alternatingly with the spacer ring sections at the second axial portion of the body. By pumping inert gas into the space between the first set of sheet ring sections and the second set of sheet ring sections, leakage of oil through the radially inner ends of the first set of sheet ring sections may be reduced thereby further improving the sealing function of the sealing arrangement.

Each sheet ring section may be shaped as a section, in particular half, of a circular ring. Thereby, manufacturing of the sheet ring sections and assembly may be simplified.

The thickness of the sheet ring sections may be between 0.4 mm to 0.8 mm, in particular about 0.6 mm. Thereby, the sheet ring sections may be conventionally manufactured and may provide a good sealing function. The thickness of the spacer ring sections may be between 1 mm and 4 mm.

According to an embodiment of the present invention it is provided a bearing arrangement, comprising a rotor, a bearing for rotatably supporting the rotor, the bearing having a casing including an arrangement for sealing according to one of the above described embodiments, being adapted such that a radially inner end of the plurality of sheet ring sections is arranged close to an outer surface of the rotor, wherein the arrangement for sealing seals fluid transmission from an inside of the casing of the bearing filled with a lubricant to an outside of the casing of the bearing.

The bearing arrangement may be employed for any turbine or any device or apparatus comprising a rotor which needs to be rotatably supported.

According to a further embodiment, a steam turbine comprising a bearing arrangement as described in one of the embodiments above is provided.

It should be understood that features which have been individually or in any combination disclosed, described, explained or provided for an arrangement for sealing may also be applied to a method of manufacturing an arrangement for sealing according to an embodiment of the present invention and vice versa.

According to an embodiment of the present invention it is provided a method of manufacturing an arrangement for sealing, the method comprising mounting a plurality of ring sections spaced apart in an axial direction at a body such that the plurality of ring sections extends in a radial direction inwards.

The method may further comprise to assemble at least two sections in order to complete an entire circumference around a rotor to be supported.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

The invention is now described with reference to the accompanying drawings. The invention is not restricted to the illustrated or described embodiments.
Fig. 1 schematically illustrates in a cross-sectional view a portion of a steam turbine according to an embodiment of the present invention including a bearing arrangement according to an embodiment of the present invention;
Fig. 2 schematically illustrates in a cross-sectional view a portion of a bearing including an arrangement for sealing according to an embodiment of the present invention;
Fig. 3 schematically illustrates in a cross-sectional partial view an arrangement for sealing according to an embodiment of the present invention;
Figs. 4 to 23 illustrate in schematic perspective views method steps during manufacturing an arrangement for sealing according to an embodiment of the present invention.

### Detailed Description

The illustration in the drawings is in schematic form. It is noted that in different figures, similar or identical elements are provided with the same reference signs or with reference signs, which are different from the corresponding reference signs only within the first digit.

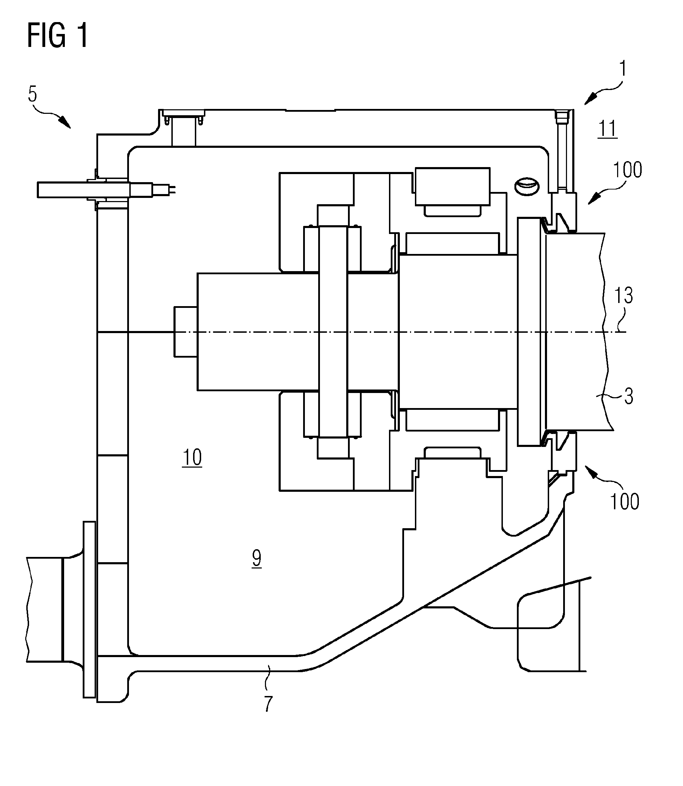

**Fig. 1** schematically illustrates in a cross-sectional view a steam turbine 1 according to an embodiment of the present invention comprising an arrangement 100 for sealing according to an embodiment of the present invention. The steam turbine 1 comprises a rotor 3 that is supported in a bearing 5 comprising a casing 7 in which lubricant, in particular oil 9, is accompanied. The casing 7 may comprise several sections including the arrangement 100 for sealing in order to avoid that the oil 9 exits the inside of the bearing 5 and reaches the outside 11 of the bearing 5. The steam turbine 1 may comprise elements and components as a conventional steam turbine except the arrangement 100 for sealing. During operation of the steam turbine 1, the rotor 3 may rotate around the rotation axis 13, while the arrangement 100 for sealing remains fixed.

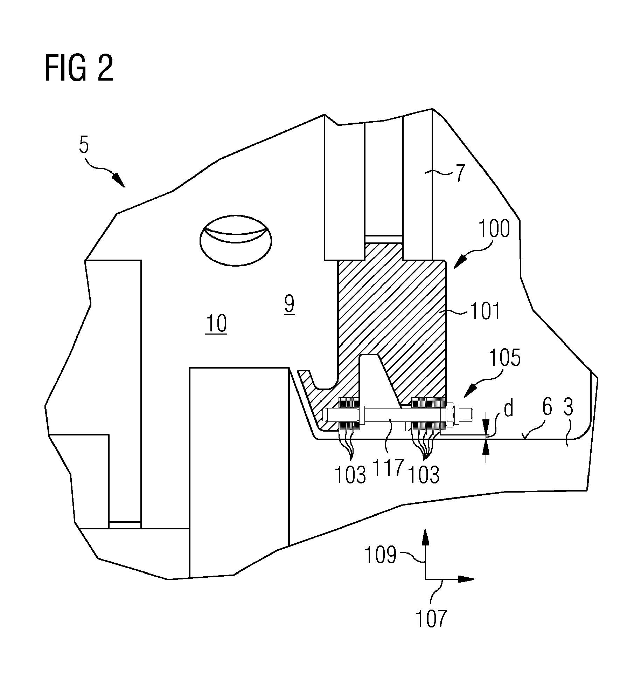

A closer look in a schematic cross-sectional view of the arrangement 100 is illustrated in **Fig. 2**. The arrangement 100 comprises a body 101 and a plurality of sheet ring sections 103 which are entities different from the body 101. A mounting equipment 105 mounts the plurality of ring sections 103 spaced apart in an axial direction 107 (parallel to the rotation axis 13 of the rotor 3) such that the plurality of ring sections 103 extend in a radial direction inward (i.e. the opposite of the radial direction 109).

Between the outside surface 6 of the rotor 3 at a radially inner end of the sheet ring sections 103, a small gap is present which may have a size d of about 0.2 to 0.3 mm. Other values are possible. The arrangement 100 reduces or even prevents leakage of oil 9 from an inside 10 to an outside 11 of the bearing 5.

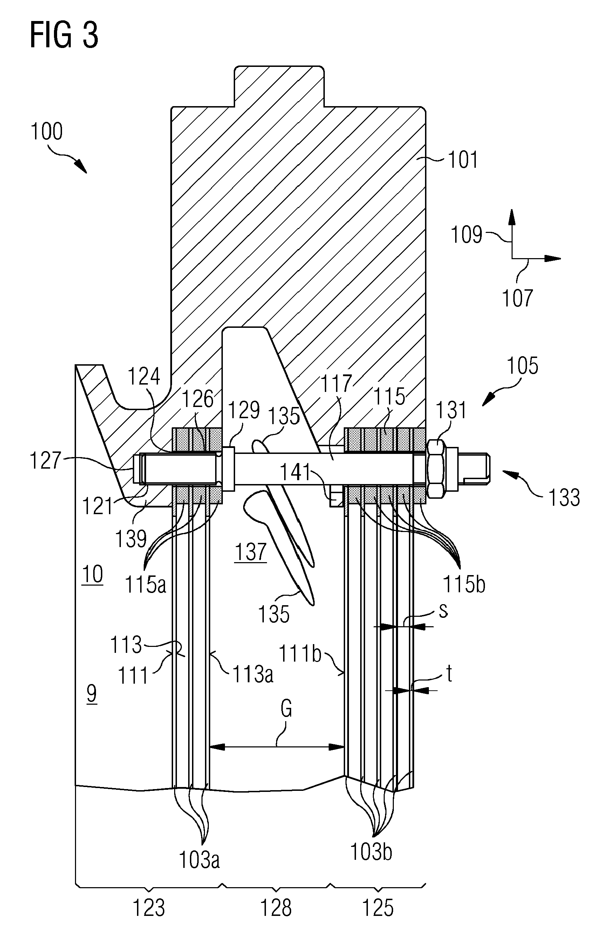

A still closer look of the sealing arrangement 100 is illustrated in **Fig. 3** in a cross-sectional schematic view. The body 101 of the sealing arrangement 100 may be made of a metal, such as aluminum or stainless steel. The sheet ring sections 103a,b (also referred to as metallic strips) are formed as a half of a ring. By the arrangement of the plural sheet ring sections 103a,b, a sealing labyrinth is formed. Each sheet ring section 103a,b comprises two limiting plane surfaces 111a,b and 113a,b being opposed relative to each other.

The arrangement 100 further comprises between adjacent sheet ring sections a respective spacer ring section 115a,b (also referred to as distance ring sections) which are mounted with a thread rod (or bolt) 117 and a secure nut or several secure nuts 119 at different circumferential positions. The thread rod or bolt 117 is secured and screwed into a threaded hole 121 in a first axial portion 123 of the body 101. The sheet ring section as well as the spacer ring sections 103a,b and 115a,b each comprise at least one through-hole 124, 126 through which the bolt 117 or thread rod 117 extends.

At the first axial portion 123 of the body 101, a first set of sheet ring sections 103a is mounted. The inside of the bearing 5 is in Fig. 3 left from the first set of sheet ring sections 103a and is filled during operation with a lubricant 9.

The body 101 further comprises a second axial portion 125 which is spaced apart by a distance G from the first axial portion 123 of the body 101. At the second axial portion 125 of the body 101, a second set of sheet ring sections 103b is mounted. Thereby, the opposing surfaces 113a of the most outside arranged sheet ring section 103a of the first set of sheet ring sections is spaced apart from the surface 111b of the first opposing sheet ring section 103b mounted at the second axial portion 125 of the body by the distance g.

In the illustrated embodiment, the first set of sheet ring sections 103a comprises three sheet ring sections and the second set of sheet ring sections 103b comprises five sheet ring sections. Other numbers are possible. One end 127 of the bolt 117 is threaded into the threaded hole 121. A projection 129 of the bolt 117 holds a most outside arranged spacer ring section 115a at the first axial portion 123 of the body. The projection 129 is characterized by a larger diameter than the inner diameter of the through-holes 124, 126 of the spacer ring section and/or the sheet ring section 103a, 115a.

A nut 131 is screwed onto the bolt 117 at another end 133 of the bolt 117, in order to secure the plurality of sheet ring sections 103, in particular the second set of sheet ring sections 103b. Additional washers may be provided. The nut may for example be of type M5 according to ISO 10511. Other types are possible. The intermediate portion 128 between the first axial portion 123 and the second axial portion 125 of the body 101 further comprises one or more entry duct(s) 135 for gas inlet into a space 137 between the first set of sheet ring sections 103a and the second set of sheet ring sections 103b.

The thickness t of the sheet ring sections 103a, 103b may for example between 0.4 mm and 0.8 mm. The thickness s of the spacer ring sections 115 may for example be between 1 mm and 4 mm. Other values are possible.

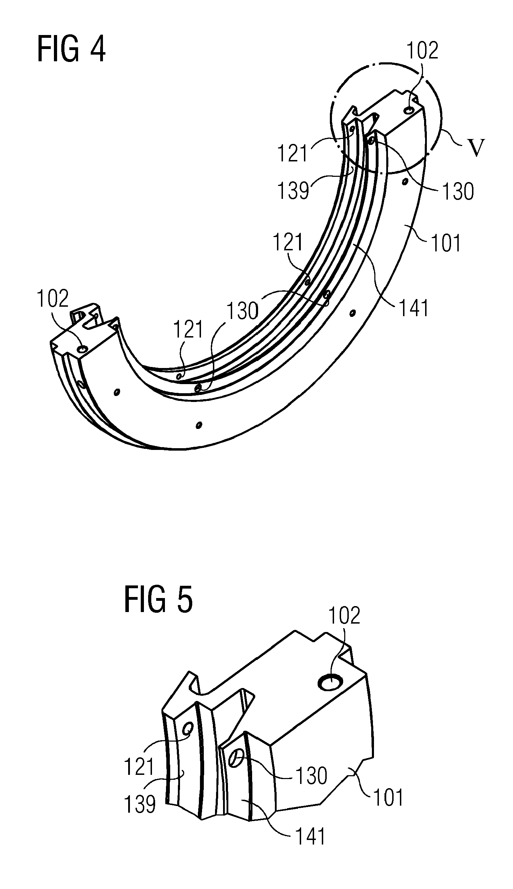

**Fig. 4 and 5** illustrate in a perspective view a body 101 of a sealing arrangement 100 according to an embodiment of the present invention. The body 101 comprises a first support ring section 139 (in the first axial portion 123) for supporting the first set of sheet ring sections 103a at the first axial portion 123 of the body, wherein the support ring section 139 projects radially inwards for providing a support area for the sheet ring sections 103a.

The body 101 further comprises a second support ring section 141 at the second axial portion 125 for supporting the second set of sheet ring sections 103b. Thereby, also the second support ring section 141 projects radially inwards for providing an appropriate supporting area for the sheet ring sections 103b.

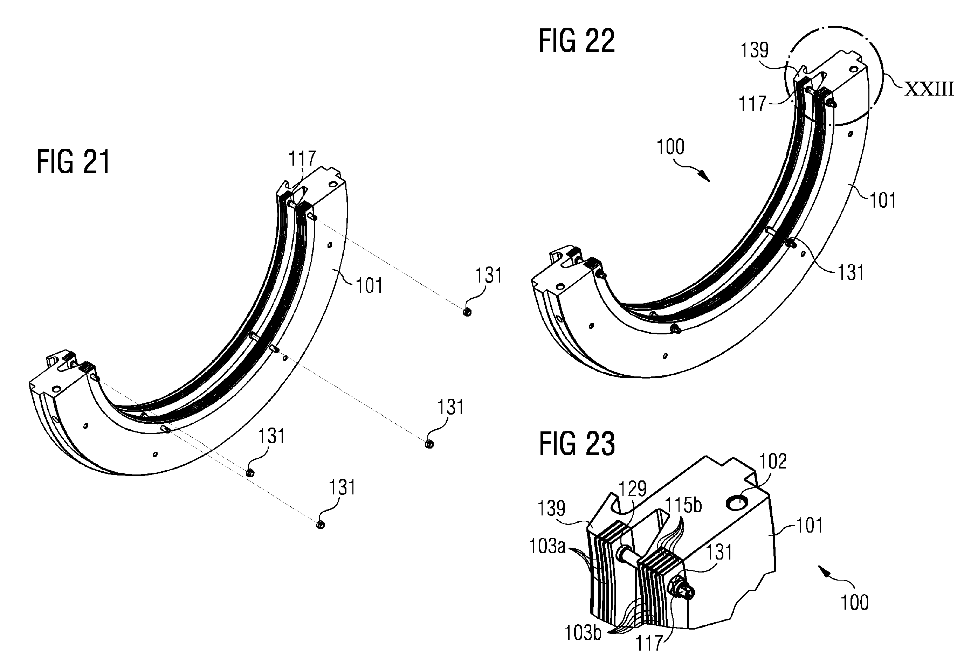

Furthermore, the body 101 is configured as a half circular ring. When all sheet ring sections are mounted at the body 101 (see Figs. 22, 23), the thereby completed half of the complete sealing arrangement may be joined with a substantially identical other half in order to form a complete circumference for enclosing a rotor such that an outer surface of the rotor is enclosed in the completed sealing ring.

Fig. 5 illustrates a closer view of the area in Fig. 4 labeled with 5. The body 101 comprises a hole 102 for joining the body with a substantially identical body for achieving a complete circumference.

The first support ring section 139 comprises the threaded hole 121, in particular four threaded holes 121 for the half ring-shaped body 101. The second support ring section 141 comprises the through-holes 130 being arranged in line with the threaded holes 121.

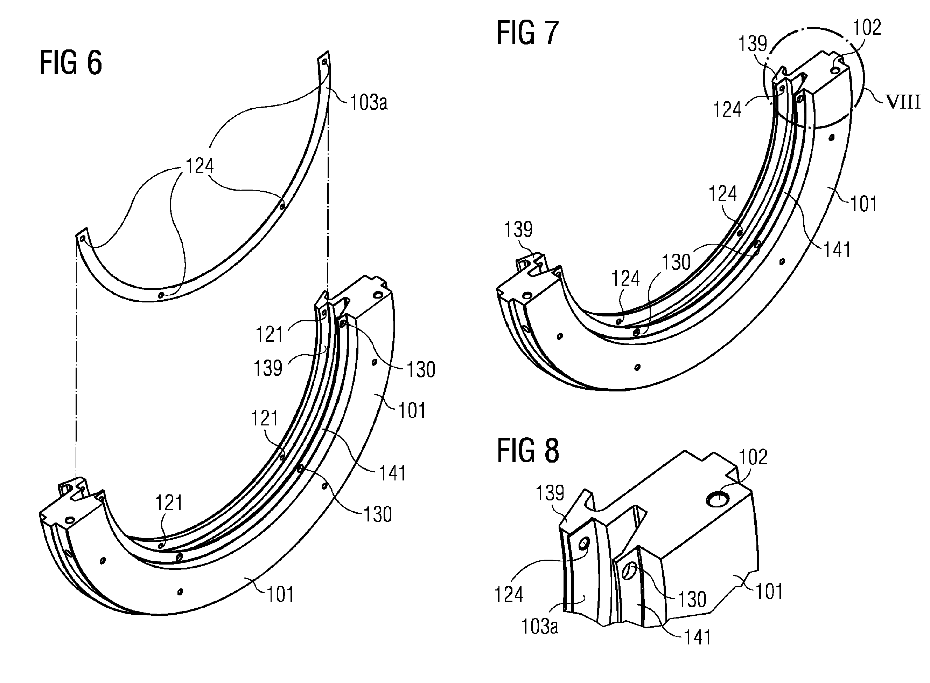

**Figs. 6 to 23** schematically illustrate further method steps for manufacturing an arrangement for sealing, such as an arrangement for sealing 100 as illustrated in Figs. 1, 2 or 3.

In the method step illustrated in **Fig. 6**, a first one (or most inner one) of the first set of sheet ring sections 103a is placed onto the first support ring section 139 resulting in the arrangement as illustrated in **Fig. 7** and **8**. As can be seen in particular in Fig. 8, the through-hole 124 of the sheet ring section 103a is aligned with the threaded hole 121 at the first axial portion of the body 101, i.e. at the first support ring section 139.

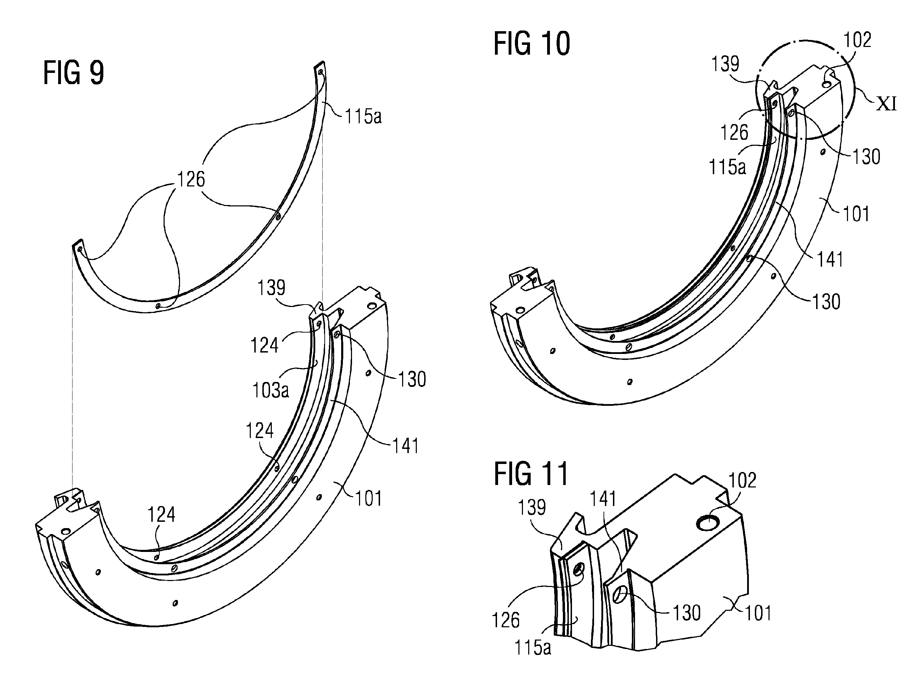

In a next method step as illustrated in **Fig. 9 to 11****,** a first spacer ring section 115a is arranged onto the first sheet ring section 103a. Again, the through-hole 126 of the spacer ring section 115a is aligned with the through-hole 124 of the sheet ring section 103a and also aligned with the threaded hole 121 at the first axial portion of the body 101.

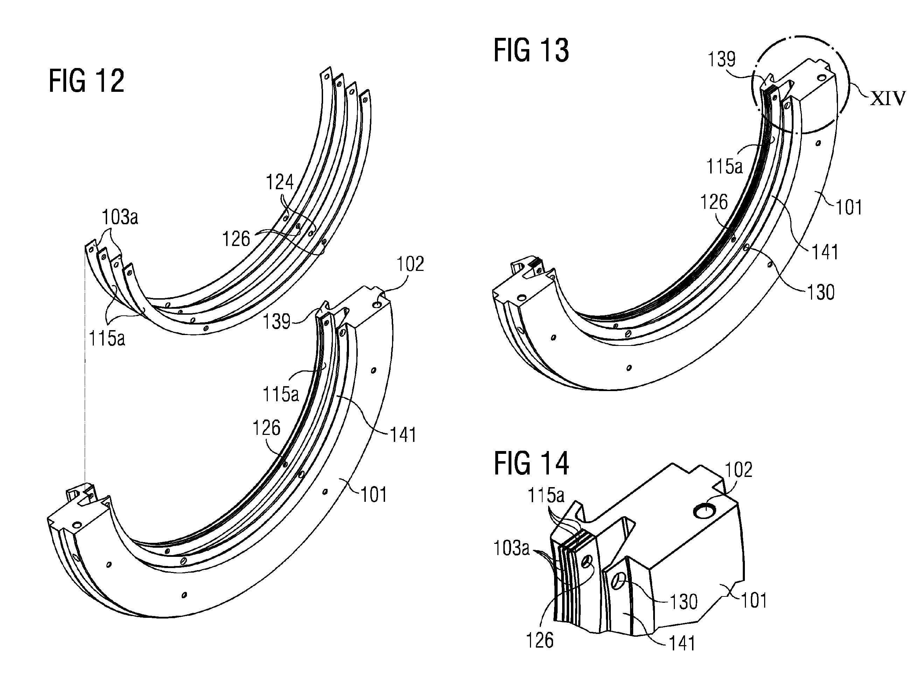

As illustrated in **Figs. 12 to 14**, additional sheet ring sections 103a alternating with additional spacer ring sections 115a are stapled on top of the already mounted spacer ring section 115a, wherein the through-holes 124, 126 are always aligned relative to each other. Thereby, mounting of the first set of sheet ring sections 103a alternating with the spacer ring sections 115a is completed, as is illustrated in Figs. 13 and 14.

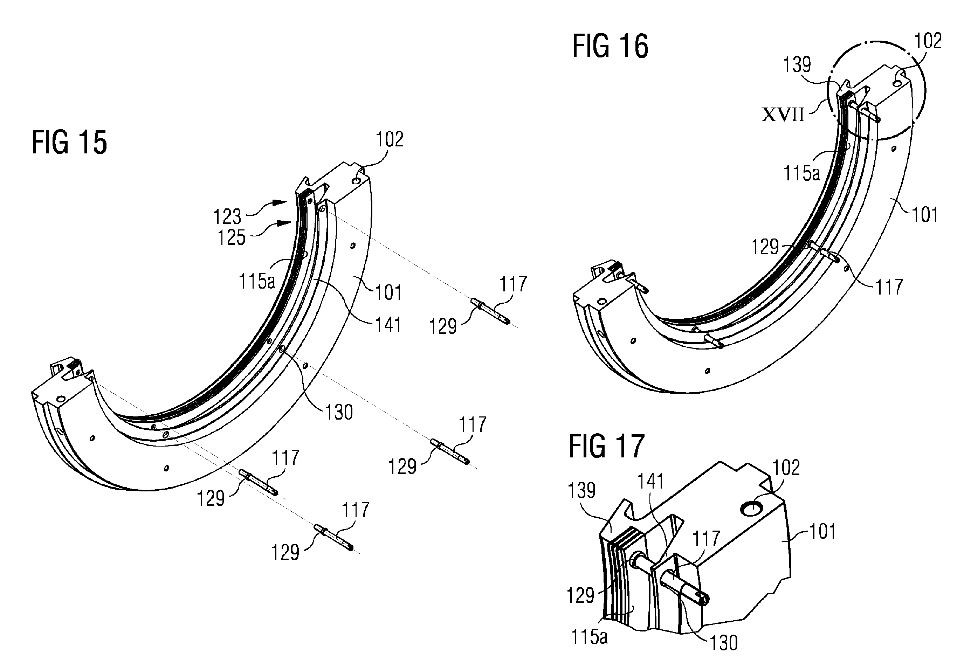

As a next method step in the manufacturing method as illustrated in **Figs. 15 to 16**, four bolts 117 are guided through the through-hole 130 at the second axial portion 125 of the body 101, through the through-holes 126 of the spacer ring sections 115a and the through-holes 124 of the sheet ring sections 103a and is threaded or screwed into the threaded hole 121 at the first axial portion 123 of the body. The bolt 117 comprises the projection 129 which is then firmly pressed onto the surface of the last sheet ring section 103a of the first set of sheet ring sections 103a. When the bolts 117 are firmly screwed into the threaded hole 121, the mounting of the first set of sheet ring sections 103a alternating with the spacer ring sections 115a is completed, as is illustrated in Figs. 16 and **17**.

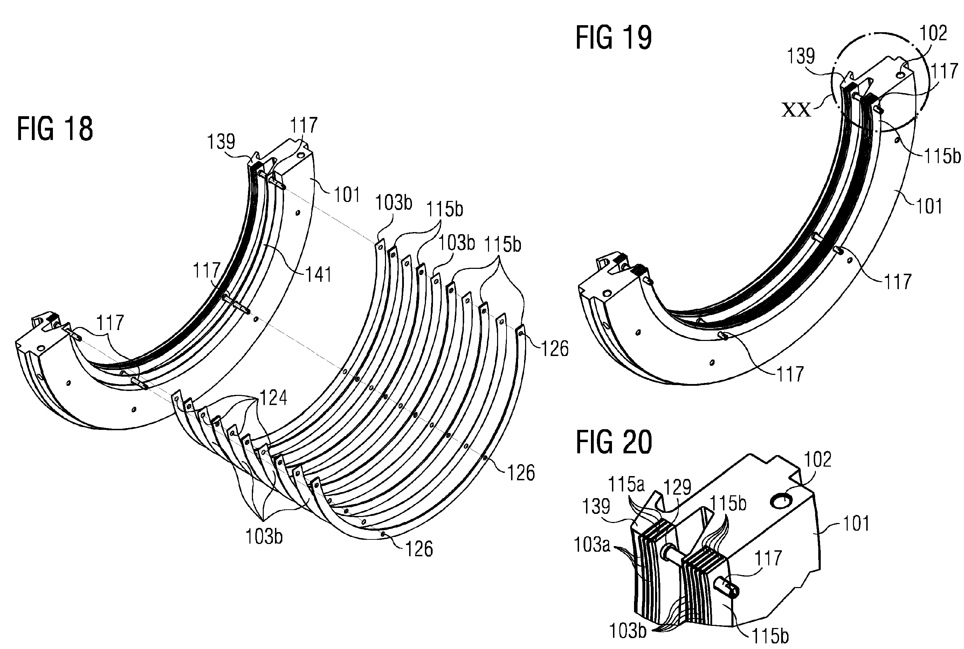

As next steps, illustrated in **Fig. 18**, a second set of sheet ring sections 103b alternating with spacer ring sections 115b are arranged onto the second support ring section 141 such that the bolt 117 is guided through the through-holes 124 of the sheet ring sections 103b and the through-holes 126 of the spacer ring sections 115b, resulting in the assembly as illustrated in **Figs. 19 and 20**.

As a last method step in manufacturing the sealing arrangement 100, the nuts 131 are screwed onto another end 133 of the bolt(s) 117 in order also to secure the second set of sheet ring section 103b alternating with the spacer ring section 115b, as illustrated in **Fig. 21 to 23**.

For using the sealing arrangement 100 in a bearing, a substantially identical sealing arrangement is joined with the already illustrated sealing arrangement to form a complete circumference enclosing a rotor which is supported by the bearing in order to avoid leakage of lubricant from an inside of the bearing.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Arrangement (100) for sealing, the arrangement comprising:
a body (101);
a plurality of sheet ring sections (103, 103a, 103b) being entities different from the body (101); and
a mounting equipment (105) that mounts the plurality of ring sections (103) spaced apart in an axial direction (107) at the body such that the plurality of ring sections extends in a radial direction (109) inwards.

2. Arrangement according to claim 1, wherein each sheet ring section (103) comprises a metal sheet formed as a section of a ring.

3. Arrangement according to claim 1 or 2, wherein each sheet ring section (103) comprises two limiting plane surfaces (111, 113) opposed relative to each other.

4. Arrangement according to one of the preceding claims, further comprising:
at least one spacer ring section (115, 115a, 115b) alternatingly arranged between respective two of the sheet ring sections (103) to define an axial separation distance (s) of the sheet ring sections,
the spacer ring section (115) being in particular manufactured using plastic and/or metal.

5. Arrangement according to one of the preceding claims, wherein the mounting equipment (105) comprises at least one bolt (117), wherein the sheet ring sections (103) and the spacer ring sections (115) each comprise at least one through hole (124, 126) through which the bolt (117) extends.

6. Arrangement according to one of the preceding claims, wherein the body comprises
a first axial portion (123) where a first set of the sheet ring sections (103a) are mounted alternating with spacer ring sections (115a),
a second axial portion (125) where a second set of the sheet ring sections (103b) are mounted alternating with spacer ring sections (115b),
an intermediate portion (128) between the first axial portion (123) and the second axial portion (125) where no sheet ring sections are mounted.

7. Arrangement according to the preceding claim, wherein the first axial portion (123) of the body comprises a threaded hole (121) into which an outside thread at one end (127) of the bolt (117) is screwed.

8. Arrangement according to the one of the last two preceding claims, wherein the second axial portion (125) of the body comprises a through hole (130) through which the bolt (117) is guided and thereby supported.

9. Arrangement according to one of the preceding claims 5 to 8, further comprising:
at least one nut (131), screwed onto the bolt (117) at another end (133) of the bolt (117) thereby securing the plurality of sheet ring sections, in particular the second set of sheet ring sections (103b), alternating with the at least one spacer ring section (115, 115b).

10. Arrangement according to the preceding claims 6 to 9, wherein the body (101) comprises at the intermediate portion an entry duct (135) for gas inlet into a space (137) between the first set of the sheet ring sections (103a) and the second set of the sheet ring sections (103b).

11. Arrangement according to one of the preceding claims, wherein each sheet ring section (103) is shaped as a section, in particular half, of a circular ring,
wherein a thickness (t) of the sheet ring sections is in particular between 0.4 mm to 0.8 mm, further in particular about 0.6 mm,
wherein a thickness (s) of the spacer ring sections is in particular between 1 mm to 4 mm.

12. Bearing arrangement, comprising:
a rotor (3);
a bearing (5) for rotatably supporting the rotor,
the bearing having a casing (7) including an arrangement (100) for sealing according to one of the preceding claims, being adapted such that a radially inner end of the plurality of sheet ring sections (103) is arranged close to an outer surface (6) of the rotor (3),
wherein the arrangement for sealing seals fluid transmission from an inside (9) of the casing (7) of the bearing (5) filled with a lubricant to an outside (11) of the casing of the bearing.

13. Steam turbine (1), comprising a bearing arrangement according to claim 12.

14. Method of manufacturing an arrangement (100) for sealing, the method comprising:
mounting a plurality of ring sections (103, 103a, 103b) spaced apart in an axial direction (107) at a body (101) such that the plurality of ring sections (103, 103a, 103b) extends in a radial direction (109) inwards.
